Europäisches Patentamt

European Patent Office

Office européen des brevets

(19)

(11) EP 0 840 709 B1

(12) **EUROPÄISCHE PATENTSCHRIFT**

(45) Veröffentlichungstag und Bekanntmachung des Hinweises auf die Patenterteilung:
**30.06.1999 Patentblatt 1999/26**

(21) Anmeldenummer: **96927516.3**

(22) Anmeldetag: **17.07.1996**

(51) Int Cl.⁶: **C01B 17/04**, C01B 17/05

(86) Internationale Anmeldenummer:
**PCT/DE96/01380**

(87) Internationale Veröffentlichungsnummer:
**WO 97/03920 (06.02.1997 Gazette 1997/07)**

(54) **VERFAHREN UND ANLAGE ZUR ERZEUGUNG VON SCHWEFEL IN EINEM CLAUS-PROZESS**

CLAUS SULPHUR PRODUCTION PROCESS AND INSTALLATION

PROCEDE ET INSTALLATION DE PRODUCTION DE SOUFRE PAR UN PROCEDE CLAUS

(84) Benannte Vertragsstaaten:
**DE IT**

(30) Priorität: **21.07.1995 IT MI951579**

(43) Veröffentlichungstag der Anmeldung:
**13.05.1998 Patentblatt 1998/20**

(73) Patentinhaber:
- **MANNESMANN Aktiengesellschaft**
  **40213 Düsseldorf (DE)**
- **K.T.I. Group B.V.**
  **NL-2700 AB Zoetermeer (NL)**

(72) Erfinder:
- **VILLA, Sergio**
  **I-20125 Milano (IT)**
- **SALA, Luciano**
  **I-20099 Sesto San Giovanni (MI) (IT)**
- **MOLINARI, Lucio**
  **I-20125 Milano (IT)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
**EP-A- 0 375 077         US-A- 4 356 161**

**Beschreibung**

Die Erfindung betrifft ein Verfahren zur Erzeugung von Schwefel aus einer an $CO_2$ und $H_2S$ reichen Lösung, aus der in einer Regenerationskolonne $CO_2$ und $H_2S$ als Gas freigesetzt und ein regeneriertes Lösungsmittel erzeugt wird, wobei das freigesetzte Gas danach einem Claus-Prozeß zugeleitet wird, aus dem einerseits der Schwefel und andererseits ein Restgas abgeführt wird. Weiterhin betrifft die Erfindung eine Anlage zur Durchführung dieses Verfahrens.

Das Verfahren und die Anlage zu dessen Durchführung, die Gegenstand dieser Erfindung sind, lassen sich einsetzen insbesondere für die Aufbereitung von Raffineriegasen und Synthesegasen, die bei der Kohlevergasung und bei der Verbrennung von Schwerölen, Teerölen und Erdgas entstehen und die im Vergleich zu ihrem Gehalt an $H_2S$ einen hohen Gehalt an $CO_2$ aufweisen. Das $H_2S$ wird üblicherweise durch Absorption in einem Lösungsmittel (z. B. MDEA = Methyldiethanolamin) gewonnen, indem die entsprechenden Gase durch einen Absorber geleitet werden. Trotz der Verwendung von Lösungsmitteln, die gegenüber $H_2S$ selektiv wirken, erhält man regelmäßig bei der anschließenden Freisetzung der absorbierten Gase durch Regeneration des Lösungsmittels ein Sauergas, also einen Gasstrom mit erheblichen Mengen an $CO_2$. Ein solches Gas läßt sich in einer Claus-Anlage, in der die Entschwefelung, also die Schwefelgewinnung stattfindet, nur schwer verarbeiten. Ohne Zuhilfenahme von technisch reinem Sauerstoff oder entsprechend angereicherter Luft für die Verbrennung läßt sich dieses Gas im thermischen Reaktor der Claus-Anlage nur schwer verarbeiten. Nach dem bisherigen Stand der Technik ist für ein solches $H_2S$-armes Sauergas auf jeden Fall eine Sauerstoff-Anreicherung für die Verbrennungsluft notwendig, um eine geeignete Flammentemperatur zu gewährleisten. Durch den erforderlichen Einsatz von Sauerstoff ergeben sich aber nicht nur wirtschaftliche Belastungen, sondern auch erhebliche Sicherheitsprobleme, die die Akzeptanz entsprechender Anlagen zur Verarbeitung derartiger Gase beeinträchtigen.

Um die negativen Folgen des relativ geringen $H_2S$-Gehaltes zu vermindern, hat man bisher versucht, den $H_2S$-Gehalt der zur Claus-Anlage geleiteten Sauergase auf größtmögliche Werte anzureichern. Die dazu bekannt gewordenen Maßnahmen konzentrierten sich bislang auf eine Erhöhung der H2S-Selektivität der bei der Absorption der Sauergase benutzten Lösungsmittel. Dabei konnten zwar deutliche Verbesserungen erzielt werden. Dennoch ist die Zusammensetzung des Sauergases nicht immer für eine Einspeisung in eine mit normaler Luft arbeitende Claus-Anlage geeignet.

Aufgabe der Erfindung ist es, ein gattungsgemäßes Verfahren und eine Anlage zu dessen Durchführung vorzuschlagen, bei dem ein Sauergas mit vergleichsweise geringem $H_2S$-Gehalt eingesetzt werden kann, ohne daß für den Claus-Prozeß der Einsatz von reinem Sauerstoff oder Sauerstoff-angereicherter Luft vorgesehen werden muß. Das Verfahren und die Anlage sollen eine Anreicherung des $H_2S$-Gehaltes des dem Claus-Prozeß zugeführten Einsatzgases auf vergleichsweise hohe Werte ermöglichen.

Gelöst wird diese Aufgabe erfindungsgemäß hinsichtlich des Verfahrens mit den Merkmalen des Patentanspruchs 1. Vorteilhafte Weiterbildungen dieses Verfahrens ergeben sich aus den Unteransprüchen 2 bis 9. Eine Anlage zur Durchführung des Verfahrens weist die im Patentanspruch 10 angegebenen Merkmale auf. In den Unteransprüchen 11 bis 17 ist diese Anlage in vorteilhafter Weise weitergebildet.

Der Kern der Erfindung ist darin zu sehen, daß zur Erzielung einer möglichst starken Anreicherung des $H_2S$-Gehalts im Einsatzgas der Claus-Anlage eine zweistufige Regeneration der an $CO_2$ und $H_2S$ reichen Lösung vorgenommen wird. In der ersten Stufe der Regeneration, die über eine Entspannung der vorzugsweise vorgewärmten und unter Überdruck stehenden reichen Lösung in einem Flash-Abscheider vorgenommen wird, wird eine größtmögliche Teilmenge an $CO_2$ desorbiert. In der zweiten Stufe der Regeneration wird dann das restliche $CO_2$ und die Hauptmenge an $H_2S$ aus der Lösung ausgetrieben. Erst das in der zweiten Stufe freigesetzte Sauergas stellt das Einsatzgas für die Claus-Anlage dar. Das in der ersten Regenerationsstufe freigesetzte Gas enthält neben $CO_2$ unvermeidbar auch einen Anteil $H_2S$. Damit dieser $H_2S$-Anteil nicht verlorengeht, wird das Gas aus der ersten Regenerationsstufe durch einen Absorber geschickt, der mit bereits regenerierter Lösung betrieben wird und eine selektive Re-Absorption des $H_2S$ ermöglicht. Das aus diesem Absorber abströmende, nicht absorbierte Gas enthält dann nur noch einen sehr geringen Anteil an $H_2S$. Die in der Re-Absorption gewonnene Lösung kann, da sie weiterhin noch aufnahmefähig ist für $H_2S$, entweder mit der aus der ersten Regenerationsstufe abströmenden Lösung zusammengeführt werden oder kann in einem anderen Absorptionsprozeß außerhalb des erfindungsgemäßen Verfahren verwendet werden, vorzugsweise in derjenigen Anlage, die die für das Verfahren benötigte an $CO_2$ und $H_2S$ reiche Lösung liefert. Da in der Claus-Anlage keine vollständige Umwandlung des $H_2S$ in das zu erzeugende Schwefelprodukt erfolgt, sieht die Erfindung darüber hinaus vor, daß das Schwefelkomponenten enthaltende Restgas der Claus-Anlage nach einer Reduktionsbehandlung, in der die Schwefelkomponenten in $H_2S$ umgewandelt werden, ebenfalls in die Anlage zur Re-Absorption des in der ersten Regenerationsstufe freigesetzten Gases eingeführt wird. Dadurch wird gewährleistet, daß der $H_2S$-Gehalt des Restgases der Claus-Anlage nicht verloren geht, sondern weitestgehend zurückgewonnen wird. Auf diese Weise ist, bezogen auf die Gesamtmenge des in das Verfahren eingeführten Schwefels, eine Rückgewinnung an Schwefel in einer Größenordnung von über 99,8 % möglich. Je nach verwendetem Lösungsmittel läßt sich der Schwefelgehalt in

EP 0 840 709 B1

dem Abgas der Re-Absorptionsstufe auf unter 250 ppm reduzieren, z.B. bis auf Minimalwerte von 10 ppm. Die vorliegende Erfindung ermöglicht unter Einsatz einer einzigen Absorberstufe für die Re-Absorption nicht nur eine erhebliche Anreicherung des Einsatzgases für den Claus-Prozeß, sondern stellt gleichzeitig auch eine weitestgehende Rückgewinnung der im Abgas der Claus-Anlage enthaltenen Restmengen an Schwefelkomponenten sicher.

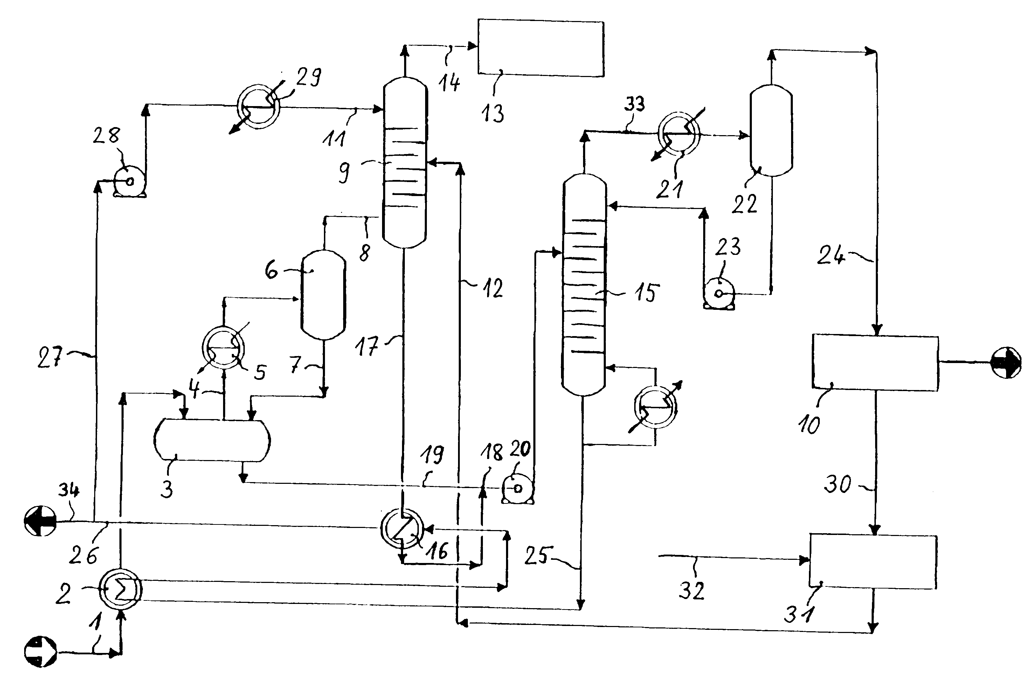

Im folgenden wird die Erfindung anhand des in der einzigen Figur dargestellten Anlagenschemas, das eine Ausführungsform der Erfindung wiedergibt, erläutert.

In eine Rohrleitung 1 wird eine Lösung eingespeist, die bei der Gaswäsche von z.B. Raffinerie- oder Synthesegasen aus einer nicht dargestellten Gasreinigungsanlage abgezogen wurde. Diese Lösung enthält praktisch den gesamten Gehalt an $H_2S$ und ca. 50 % des $CO_2$ aus dem in der Gasreinigungsanlage ursprünglich aufzubereitenden Gas. Bei einer nach dem Stand der Technik durchgeführten Regeneration einer solchen Lösung würde ein Sauergas mit einem besonders hohen $CO_2$-Gehalt (z.B. 65 %) freigesetzt, das zu einer Claus-Anlage geleitet werden müßte, die mit reinem Sauerstoff oder angereicherter Luft betrieben wird. Hierdurch würden die Gesamtbetriebskosten dieser Anlage erheblich erhöht werden. Das erfindungsgemäße Verfahrensschema sieht zunächst eine Erwärmung der reichen Lösung in einem indirekten Wärmetauscher 2 vor, der in die Rohrleitung 1 eingeschaltet ist und heizmittelseitig mit warmer regenerierter Lösung betrieben wird. Zweckmäßigerweise wird die unter Überdruck stehende reiche Lösung auf mindestens 50°C, vorzugsweise auf geringfügig über 100 °C vorgewärmt. Die erwärmte reiche Lösung wird dann zu einem Flash-Abscheider 3 geführt, in dem eine Expansion auf einen niedrigen Druck stattfindet. Dabei werden eine erhebliche Menge des absorbierten $CO_2$ sowie ein Teil des $H_2S$ und eventuell vorhandene Kohlenwasserstoffe freigesetzt. Außerdem entsteht Wasserdampf, da die reiche Lösung als Begleitstoff üblicherweise Wasser enthält. Die im Flash-Abscheider freigesetzten Gase und Dämpfe werden dann über eine Leitung 4 abgezogen und in einem Kühler 5, der als indirekter Wärmetauscher arbeitet, abgekühlt, so daß der Wasserdampf kondensiert. In einem sich anschließenden Kondenswasserabscheider 6 wird das Kondenswasser abgetrennt und durch eine Wasserrückführleitung 7 in den Flash-Abscheider 3 zurückgeführt. Das freigesetzte Gasgemisch, das überwiegend aus $CO_2$, $H_2S$ und den sonstigen Gasen besteht, die in der reichen Lösung während der Absorption unter Hochdruck gelöst wurden, wird anschließend über die Zuleitung 8 vom Kondenswasserabscheider 6 zu einem Absorber 9 geführt. In diesen Absorber 9 wird außer dem Flash-Gas auch über die Restgaszuleitung 12, auf die später noch eingegangen wird, das Restgas aus einer Claus-Anlage 10 eingeführt.

In den Kopfbereich des Absorbers 9, der bei einem zweckmäßigerweise geringfügig über dem atmosphärischen Druck liegenden Druck arbeitet, wird als Absorptionsmittel über eine Zuleitung 11 Lösungsmittel in Form einer regenerierten Lösung eingeleitet. Die Temperatur der zugeführten regenerierten Lösung sollte möglichst tief liegen, d. h. zumindest nicht wesentlich über Umgebungstemperatur liegen. Aus diesem Grunde ist die Einschaltung eines indirekten Wärmetauschers 29 als Kühler in die Zuleitung 11 zweckmäßig. Der Absorber 9 bewirkt eine weitgehende Re-Absorption des $H_2S$-Anteils aus der Gasphase, da das Lösungsmittel für $H_2S$ selektiv wirkt. Die Selektivität ist um so besser, je niedriger der Druck im Absorber 9 ist. Das den Absorber 9 über eine Ableitung 14 verlassende nichtabsorbierte Gas enthält im Regelfall weniger als 250 ppm an $H_2S$. Ein typischer Wert liegt bei etwa 200 ppm $H_2S$. Es ist jedoch ohne weiteres möglich, je nach verwendetem Lösungsmittel und eingestelltem Druck im Absorber eine Absenkung des $H_2S$-Gehaltes im Abgas des Absorbers 9 auf etwa 10 ppm zu erzielen. Bei einer Re-Absorption bis auf etwa 200 ppm $H_2S$ im Abgas des Absorbers 9 wird nur etwa 20 % des in den Absorber 9 eingeführten $CO_2$ re-absorbiert. Zweckmäßigerweise gelangt das Abgas des Absorbers 9 durch die Leitung 14 in eine Brennkammer 13, in der der geringe Gehalt an nicht re-absorbiertem $H_2S$ zu $SO_2$ oxidiert wird. Nur dieser geringe $H_2S$-Anteil (unter 250 ppm) wird in Form von $SO_2$ freigesetzt und geht somit verloren. Der übrige Anteil an Schwefelkomponenten kann im Verfahren gemäß dieser Erfindung zurückgewonnen werden. In die Brennkammer 13 wird auch die gesamte $CO_2$-Menge geleitet, die bei der selektiven $H_2S$-Re-Absorption nicht in die Lösung gelangte. Auf diese Weise wird vermieden, daß dieser $CO_2$-Anteil in das Einsatzgas der bereits erwähnten Claus-Anlage 10 gelangt. Dadurch wird der H2S-Gehalt dieses Einsatzgases, das zwar nach wie vor ein Sauergas darstellt, erheblich erhöht. Weiterhin ist in diesem Zusammenhang anzumerken, daß durch die Freisetzung von Kohlenwasserstoffen aus der reichen Lösung im Flash-Abscheider 3 eine Eliminierung der Kohlenwasserstoffe im Einsatzgas der Claus-Anlage 10 erreicht wird, da diese Kohlenwasserstoffe bei der Re-Absorption im Absorber 9 nicht wieder in die Lösung aufgenommen werden. Aus diesem Grunde ist das nach dem erfindungsgemäßen Verfahren angereicherte Einsatzgas der Claus-Anlage sowohl für Claus-Anlagen des Typs "split flow" als auch des Typs "Direktoxidation" grundsätzlich geeignet.

Die aus dem Boden des Absorbers 9 austretende Lösung wird über eine Ableitung 17 zunächst über einen indirekten Wärmetauscher 16 geleitet, in dem sie vorgewärmt wird, bevor sie an der mit dem Bezugszeichen 18 versehenen Stelle mit der über eine Ableitung 19 aus dem Flash-Abscheider 3 abgezogenen reichen Lösung vereinigt wird. Der Wärmetauscher 16 wird heizmittelseitig ebenso wie der Wärmetauscher 2 in bevorzugter Weiterbildung der Erfindung mit warmer regenerierter Lösung betrieben. Alternativ ist es selbstverständlich möglich, die aus dem Absorber 9 abgezogene Lösung anderweitig außerhalb des Verfahrens der Erfindung einzusetzen. Zweckmäßig wäre insbesondere die Verwendung dieser für $H_2S$ weiterhin aufnahmefähigen Lösung in dem Absorptionsprozeß, der eine für das vorliegende Verfahren als Einsatzmaterial geeignete reiche Lösung erzeugt. Im dargestellten Ausführungsbeispiel

3

ist jedoch die unmittelbare Verwertung der aus dem Absorber 9 abgezogenen Lösung im erfindungsgemäßen Verfahren vorgesehen.

Die beiden an der Stelle 18 zusammengeführten Lösungsmittelströme aus den Ableitungen 17 und 19 werden mittels einer Pumpe 20 zu einer Regenerationskolonne 15 geführt. In dieser Regenerationskolonne 15 findet die zweite Stufe des Regenerationsprozesses der reichen Lösung statt, d.h. daß hier das Einsatzgas für die Claus-Anlage 10 aus der reichen Lösung freigesetzt wird. Hierzu werden in der Regenerationskolonne 15 die Sauergase mittels Dampf, der von einem im unteren Bereich angebrachten Dampferzeuger (Heizkreislauf) erzeugt wird, aus der Lösung gestrippt. Das mit $H_2S$ angereicherte Sauergas strömt vom Kopf der Regenerationskolonne 15 zweckmäßigerweise durch eine Gasausgangsleitung 33 in einen Kondensator 21, in dem es indirekt gekühlt wird. Der kondensierte Wasserdampf wird in einem anschließenden Kondenswasserabscheider 22 abgetrennt und mittels einer Pumpe 23 wieder in die Regenerationskolonne 15 zurückgeführt. Zweckmäßigerweise mündet die Kondenswasserrückführleitung im oberen Teil der Regenerationskolonne 15. Das aus dem Kondenswasserabscheider 22 über eine Gaszuleitung 24 abgezogene Sauergas weist zweckmäßigerweise noch eine Temperatur von etwa 40 bis 50 °C auf, wenn der Kondensator 21 in entsprechender Weise betrieben wird. In dieser Form gelangt das Sauergas in die bereits erwähnte Claus-Anlage 10, in der in an sich bekannter Weise die Gewinnung des Schwefelproduktes stattfindet. Der Abzug des flüssigen Schwefels ist durch einen dicken nach rechts führenden Pfeil angedeutet.

Am Boden der Regenerationskolonne 15 wird die regenerierte Lösung, die durch den Wärmeeintrag des Dampferzeugers erwärmt ist, durch eine Ableitung 25 abgeführt. Wie bereits zuvor erwähnt, dient die heiße regenerierte Lösung zweckmäßigerweise als Heizmittel für die beiden indirekten Wärmetauscher 2 und 16, in denen die Vorwärmung der reichen Lösung stattfindet. Nach Abgabe der noch nutzbaren Restwärme im Vorwärmer 16 wird die regenerierte Lösung durch eine Ableitung 26 abgeführt. Zweckmäßigerweise wird ein Teilstrom dieser an sich aus dem Verfahren auszuschleusenden regenerierten Lösung als Lösungsmittel für die Re-Absorption des $H_2S$ im Absorber 9 abgezweigt. Hierzu zweigt eine mit dem Bezugszeichen 27 versehene Rückführleitung von der Ableitung 26 ab. Die zurückzuführende regenerierte Lösung wird über eine Pumpe 28 und den bereits erwähnten Kühler 29 durch die Zuleitung 11 in den Absorber 9 gegeben. Die Ableitung des tatsächlich aus dem Verfahren auszuschleusenden Stroms an regenerierter Lösung ist mit dem Bezugszeichen 34 sowie mit einem schwarzen nach links zeigenden Pfeil gekennzeichnet. Der durch die Ableitung 34 gehende Lösungsmittelstrom kann zur $H_2S$-Absorption in einem nicht dargestellten, außerhalb des erfindungsgemäßen Verfahrens liegenden Absorber eingesetzt werden.

In Zusammenhang mit der bereits erwähnten Claus-Anlage 10 ist festzustellen, daß diese mit normaler Umgebungsluft als Oxidationsmittel arbeitet. Zweckmäßigerweise erfolgt die Verbrennung zunächst mit einer eingeschränkten Luftmenge, so daß die Oxidation eines Drittels des $H_2S$ zu $SO_2$ bewirkt wird. Hierdurch entsteht ein $H_2S/SO_2$-Verhältnis von 1 : 2. Dieses Verhältnis entspricht dem Idealverhältnis der Claus-Reaktion:

$$2H_2S + SO_2 \rightarrow 2H_2O + 3S$$

Die Claus-Anlage zur Gewinnung des Schwefelproduktes, also zur Rückgewinnung des Schwefelanteils in den Gasen, die in dem dem Verfahren der Erfindung vorgeschalteten Gasreinigungsprozeß behandelt wurden, kann beispielsweise aus einer Anlage mit zwei katalytischen Reaktoren bestehen (nicht dargestellt), so daß die Rückgewinnung mit einem Wirkungsgrad der Claus-Anlage bezüglich des in Form von $H_2S$ im eingespeisten Sauergas zugeführten Schwefels etwa im Bereich von 94 bis 96 % liegen kann. Dennoch liegt der Grad der Schwefelrückgewinnung, wie dies vorstehend bereits erwähnt wurde, erheblich höher, nämlich typischerweise bei mindestens 99,8 %. Dies wird dadurch gewährleistet, daß das Restgas der Claus-Anlage, das durch die Ableitung 30 abgeführt wird, erfindungsgemäß einer Aufbereitung basierend auf dem sogenannten RAR-Verfahren (reduction absorption recycle) unterzogen wird. Diese Aufbereitung, die summarisch durch den mit 31 bezeichneten Anlagenteil dargestellt ist, wird nachfolgend in ihren Grundzügen kurz erläutert:

a) Das Restgas der Claus-Anlage wird zunächst auf etwa 300 °C erhitzt und unmittelbar darauf in einen Reduktionsreaktor geleitet, der zu einer Reduktions- und QUENCH-Anlage 31 gehört. Hier wird der gesamte in den Schwefelkomponenten des Restgases enthaltene Schwefel über z.B. einen Kobalt- oder Molybdän-Katalysator in $H_2S$ umgewandelt, also reduziert.

b) Sofern das Restgas nicht bereits genügend Wasserstoff enthält, kann über eine Wasserstoffzuleitung 32 die notwendige Menge an Wasserstoff z.B. in Form von Raffineriegas zugegeben werden. Das reduzierte Restgas tritt etwa mit einer Temperatur von 300 °C aus dem Reduktionsreaktor der Reduktions- und QUENCH-Anlage 31 aus. Es wird daher zweckmäßigerweise zur Vorwärmung des Einspeisegases für den Reduktionsreaktor genutzt.

c) Beim Anfahren des Prozesses ist eine zusätzliche Erwärmung des dem Reduktionsreaktor zugeführten Gases erforderlich. Aus diesem Grunde wird die Installation eines entsprechenden stromabwärts liegenden indirekten Gas/Gas-Wärmetauschers vorgesehen. Als Wärmequelle kann beispielsweise eine elektrische Heizvorrichtung genutzt werden. Selbstverständlich sind auch andere Wärmequellen einsetzbar.

d) Im Gas/Gas-Wärmetauscher wird das reduzierte Gas auf etwa 160 bis 200 °C abgekühlt, strömt dann in das bereits erwähnte Quench-Aggregat, das zur Reduktions- und Quench-Anlage 31 gehört, und wird dort wieder abgekühlt. Dabei kondensiert ein Großteil des in dem Gas enthaltenen Wasserdampfs. Das Kondenswasser kann abgetrennt und aus dem Verfahren ausgeschleust werden. Diese Einzelheiten sind in der Figur nicht dargestellt.

e) Nach dieser Behandlung weist das reduzierte Restgas der Claus-Anlage typischerweise eine Temperatur von etwa 40 °C auf. Es wird dann über die bereits erwähnte Restgaszuleitung 12 zum Absorber 9 geleitet.

Die Einleitung des Restgases der Claus-Anlage 10 in den Absorber 9 erfolgt zweckmäßigerweise in einem mittleren Bereich des Absorbers 9, also oberhalb der im unteren Bereich des Absorbers 9 angebrachten Zuleitung 8 für das Flash-Gas. Die Einleitung des Restgases auf einer Zwischenebene des Absorbers 9 empfiehlt sich deswegen, weil der $H_2$S-Gehalt im Restgas weit unter dem Gehalt an $CO_2$ liegt und erheblich niedriger ist als in dem noch nicht re-absorbierten Flash-Gas in der Zuleitung 8. In entsprechender Weise empfiehlt es sich, im Fall einer alternativen Nutzung der durch die Ableitung 17 aus dem Absorber 19 abgezogenen Lösung in einem außerhalb der in der Figur dargestellten Anlage liegenden Absorberstufe diesen Lösungsstrom in einem mittleren Bereich des Absorbers einzuspeisen, da bereits ein gewisser Anteil an $H_2$S absorbiert ist.

Die Wirksamkeit des erfindungsgemäßen Verfahrens wird bei einer Betrachtung der in der Tabelle dargestellten Meßergebnisse eines Ausführungsbeispiels für das Verfahren deutlich. Neben den Zusammensetzungen der an verschiedenen Punkten des Anlagenschemas gemessenen Medienströme sind jeweils das zugehörige Molekulargewicht, der Druck und die Temperatur angegeben. Als Lösungsmittel wurde hierbei das eingangs bereits erwähnte MDEA eingesetzt. Im einzelnen handelt es sich um folgende Medienströme:

- reiche Lösung (in Leitung 1)
- Flash-Gas (in Leitung 8)
- hydriertes Restgas (in Leitung 12)
- Restgas Brennkammer (in Leitung 14)
- Sauergas SRU (in Leitung 24) (SRU = Sulphur Recovery Unit)
- produzierter Schwefel (aus Claus-Anlage 10)
- regenerierte Lösung Absorption TGCU (in Leitung 27) (TGCU = Tail Gas Clean Up)
- regenerierte Lösung andere Absorptionen (in Leitung 34)

Die in das Verfahren eingeführte reiche Lösung weist einen Gehalt von 131,40 kmol/h an $H_2$S und 171,56 kmol/h an $CO_2$ auf. Wie die Zusammensetzung des Sauergases SRU zeigt, sind im Einsatzgas der Claus-Anlage von den ursprünglich 171,56 kmol/h $CO_2$ nur noch 96,15 kmol/h enthalten. Das bedeutet, daß das Verhältnis der $H_2$S-Konzentration zur $CO_2$-Konzentration relativ um etwa 85 % gegenüber dem ursprünglichen Konzentrationsverhältnis erhöht werden konnte. Dadurch wurde ein Betrieb der Claus-Anlage ohne die Notwendigkeit einer Zufuhr von reinem Sauerstoff oder angereicherter Luft möglich.

## Material- und Wärmebilanz

| | 1 reiche Lösung | 2 Flash-Gas | 3 hydriertes Restgas | 4 Restgas Brennkammer | 5 Sauergas SRU | 6 produzierter Schwefel | 7 regenerierte Lösung Absorption TGCU | 8 regenerierte Lösung andere Absorptionen |
|---|---|---|---|---|---|---|---|---|
| H$_2$ (kmol/h) | 0.70 | 0.70 | 7.00 | 7.70 | 0.00 | 0.00 | 0.00 | 0.00 |
| N$_2$ (kmol/h) | 0.00 | 0.00 | 241.00 | 241.00 | 0.00 | 0.00 | 0.00 | 0.00 |
| H$_2$S (kmol/h) | 131.40 | 65.00 | 6.90 | 0.10 | 136.80 | 0.00 | 1.50 | 1.40 |
| CO$_2$ (kmol/h) | 171.55 | 109.00 | 98.00 | 170.00 | 96.15 | 0.00 | 1.60 | 1.55 |
| Flüssigschwefel (kmol/h) | 0.00 | 0.00 | 0.00 | 0.00 | 0.00 | 131.30 | 0.00 | 0.00 |
| H$_2$O (kmol/h) | 3450.00 | 15.50 | 21.00 | 36.50 | 12.60 | 0.00 | 3557.00 | 3410.00 |
| MDEA (kmol/h) | 508.00 | 0.00 | 0.00 | 0.00 | 0.00 | 0.00 | 530.00 | 508.00 |
| Insg. (kmol/h) | 4261.65 | 190.20 | 371.00 | 455.30 | 245.55 | 131.30 | 4090.10 | 3920.95 |
| Insg. (kg/h) | 134720.37 | 7292.66 | 11603.73 | 14909.35 | 9120.18 | 4209.48 | 127365.71 | 122098.38 |
| Molekulargewicht | 31.61 | 36.34 | 31.20 | 32.75 | 37.14 | 32.05 | 31.14 | 31.14 |
| Druck (bar) | 40.00 | 1.20 | 1.20 | 1.10 | 1.90 | 1.01 | 1.10 | 1.20 |
| Temperatur (°C) | 70.00 | 45.00 | 40.09 | 41.00 | 45.00 | 140.00 | 40.00 | 40.00 |

Tabelle

## Patentansprüche

1.  Verfahren zur Erzeugung von Schwefel aus einer an CO$_2$ und H$_2$S reichen Lösung, aus der in einer Regenerationskolonne CO$_2$ und H$_2$S als Gas freigesetzt und ein regeneriertes Lösungsmittel erzeugt wird, wobei das freigesetzte Gas danach einem Claus-Prozeß zugeleitet wird, aus dem einerseits der Schwefel und andererseits ein Restgas abgeführt wird,
    dadurch gekennzeichnet,

    -   daß die unter Überdruck stehende an CO$_2$ und H$_2$S reiche Lösung zunächst in einem Flash-Abscheider zur Abtrennung jeweils eines Teils des $CO_2$ und $H_2S$ (Flash-Gas) entspannt wird,
- daß das Flash-Gas zur selektiven Re-Absorption von $H_2S$ in einem Absorber mit regeneriertem Lösungsmittel gewaschen wird,
- daß die bei der Re-Absorption erhaltene Lösung entweder mit der aus dem Flash-Abscheider abgezogenen und teilweise entgasten Lösung in die Regerationskolonne zur Freisetzung des Gases für den Claus-Prozeß geführt oder einem dem Verfahren vorgelagerten Absorptionsprozeß zugeführt wird, in dem die an $CO_2$ und $H_2S$-reiche Lösung für das Verfahren erzeugbar ist, und
- daß das Restgas aus dem Claus-Prozeß in den Absorber für die selektive Re-Absorption von $H_2S$ zurückgeführt wird, nachdem die in ihm enthaltenen Schwefelverbindungen durch eine Wasserstoffbehandlung zu $H_2S$ reduziert worden sind.

2. Verfahren nach Anspruch 1,
dadurch gekennzeichnet,
daß die an $CO_2$ und $H_2S$ reiche Lösung vor der Einleitung in den Flash-Abscheider auf eine Temperatur von 50 bis 110 °C erwärmt wird.

3. Verfahren nach Anspruch 2,
dadurch gekennzeichnet,
daß die Erwärmung der an $CO_2$ und $H_2S$ reichen Lösung durch indirekten Wärmetausch mit dem aus der Regenerationskolonne abgezogenen regenerierten warmen Lösungsmittel erfolgt.

4. Verfahren nach einem der Ansprüche 1 bis 3,
dadurch gekennzeichnet,
daß in dem Flash-Abscheider auch etwaige in der Lösung enthaltene Kohlenwasserstoffe freigesetzt werden.

5. Verfahren nach einem der Ansprüche 1 bis 4,
dadurch gekennzeichnet,
daß das Flash-Gas vor der Einleitung in den Absorber für die selektive Re-Absorption von $H_2S$ zunächst gekühlt und dann einer Kondensatabscheidung unterzogen wird.

6. Verfahren nach einem der Ansprüche 1 bis 5,
dadurch gekennzeichnet,
daß das bei der Re-Absorption des Flash-Gases nicht absorbierte Gas, das insbesondere $CO_2$ und einen kleinen Teil $H_2S$ sowie ggf. freigesetzte Kohlenwasserstoffe enthält, einer Verbrennung zugeführt wird, in der das H2S zu $SO_2$ oxidiert wird.

7. Verfahren nach einem der Ansprüche 1 bis 6,
dadurch gekennzeichnet,
daß die Oxidation des $H_2S$ in dem Claus-Prozeß unter Anwendung von normaler, nicht angereicherter Luft als Oxidationsmittel erfolgt.

8. Verfahren nach einem der Ansprüche 1 bis 7,
dadurch gekennzeichnet,
daß das reduzierte Restgas aus dem Claus-Prozeß in einem mittleren Bereich zwischen dem Eingang und dem Ausgang des für die selektive Re-Absorption des $H_2S$ eingesetzten Absorbers in diesen eingeführt wird.

9. Verfahren nach einem der Ansprüche 1 bis 8,
dadurch gekennzeichnet,
daß die Rückführung der aus der Re-Absorption des $H_2S$ erhaltenen Lösung in einem mittleren Bereich zwischen dem Eingang und dem Ausgang des Absorptionsprozesses für die Gewinnung der an $CO_2$ und $H_2S$ reichen Lösung erfolgt.

10. Anlage zur Durchführung des Verfahrens nach Anspruch 1 mit einer Regenerationskolonne (15) zum Strippen gelöster Gase aus einer Lösung und mit einer Claus-Anlage (10) zur Erzeugung von Schwefel durch Oxidation von $H_2S$, wobei der Eingang der Claus-Anlage (10) durch eine Rohrleitung (24) mit dem Gasausgang (33) der Regenerationskolonne (15) verbunden ist,
dadurch gekennzeichnet,

- daß im Eingangsbereich der Anlage ein Flash-Abscheider (3) vorgesehen ist zur teilweisen Abscheidung von Gasen durch Entspannung einer unter Überdruck stehenden Lösung, wobei der Flash-Abscheider (3)

    - eine Zuleitung (1) für eine an $CO_2$ und $H_2S$ reiche Lösung,
    - eine Ableitung (4) für die Gase und
    - eine Ableitung (19) für die behandelte Lösung aufweist,

- daß ein Absorber (9) für die selektive Re-Absorption von $H_2S$ vorgesehen ist, der

    - eine Zuleitung (11) für regeneriertes Lösungsmittel,
    - eine mit der Ableitung (4) verbundene Zuleitung (8),
    - eine mit einer Restgasableitung (30) der Claus-Anlage (10) in Verbindung stehende Restgaszuleitung (12),
    - eine Ableitung (17) für die im Absorber (9) erzeugte Lösung und
    - eine Ableitung (14) für das nicht absorbierte Gas besitzt,

- daß zwischen der Restgasableitung (30) der Claus-Anlage (10) und der Restgaszuleitung (12) des Absorbers (9) eine Reduktionsanlage (31) zur Umwandlung von Schwefelkomponenten in $H_2S$ eingeschaltet ist,
- daß die Ableitung (19) für die Lösung aus dem Flash-Abscheider (3) an die Regenerationskolonne (15) angeschlossen ist und
- daß die Ableitung (17) für die Lösung aus dem Absorber (9) entweder mit der Regenerationskolonne (15) oder mit einem Absorber zur Erzeugung einer $CO_2$ und $H_2S$ reichen Lösung verbunden ist.

11. Anlage nach Anspruch 10,
dadurch gekennzeichnet,
daß in die Zuleitung (1) zum Flash-Abscheider (3) ein indirekter Wärmetauscher (2) eingeschaltet ist.

12. Anlage nach Anspruch 11,
dadurch gekennzeichnet,
daß der Wärmetauscher (2) heizmediumseitig in eine Ableitung (25) zur Abführung von regeneriertem Lösungsmittel aus der Regenerationskolonne (15) eingeschaltet ist.

13. Anlage nach einem der Ansprüche 10 bis 12,
dadurch gekennzeichnet,
daß in die Ableitung (4) für das Flash-Gas ein Kühler (5) eingeschaltet ist.

14. Anlage nach Anspruch 13,
dadurch gekennzeichnet,
daß die Ableitung (4) hinter dem Kühler (5) in einen Kondensationsabscheider (6) mündet.

15. Anlage nach einem der Ansprüche 10 bis 14,
dadurch gekennzeichnet,
daß die Ableitung (14) für nicht absorbiertes Gas in einer Brennkammer (13) mündet.

16. Anlage nach einem der Ansprüche 10 bis 15,
dadurch gekennzeichnet,
daß die Restgaszuleitung (12) in einem mittleren Bereich des nach dem Gegenstromprinzip arbeitenden Absorbers (9) in diesen mündet.

17. Anlage nach einem der Ansprüche 10 bis 16,
dadurch gekennzeichnet,
daß die Ableitung (26) für regeneriertes Lösungsmittel in einem mittleren Bereich einer nach dem Gegenstromprinzip arbeitenden Absorberanlage zur Erzeugung der an $CO_2$ und $H_2S$ reichen Lösung mündet.

## Claims

1. A process for producing sulphur from a $CO_2$- and $H_2S$-rich solution, from which in a regeneration column $CO_2$ and

$H_2S$ are released as a gas and a regenerated solvent is produced, the released gas thereafter being sent to a Claus process from which firstly the sulphur and secondly a residual gas is removed,
characterised in that

- the $CO_2$- and $H_2S$-rich solution which is under excess pressure is first expanded in a flash separator to separate off part of both the $CO_2$ and $H_2S$ (flash gas),
- the flash gas is washed in a absorber with regenerated solvent for selective reabsorption of $H_2S$,
- the solution obtained upon the reabsorption is either passed, together with the solution which has been withdrawn from the flash separator and has undergone partial degasification, into the regeneration column in order to release the gas for the Claus process or is sent to an absorption process, preceding this process, in which the $CO_2$- and $H_2S$-rich solution can be produced for the process, and
- that the residual gas from the Claus process is returned into the absorber for the selective reabsorption of $H_2S$, once the sulphur compounds contained therein have been reduced to $H_2S$ by hydrogen treatment.

2. A process according to Claim 1, characterised in that the $CO_2$- and $H_2S$-rich solution is heated to a temperature of 50 to 110°C before introduction into the flash separator.

3. A process according to Claim 2, characterised in that the heating of the $CO_2$- and $H_2S$-rich solution is effected by indirect heat exchange with the regenerated hot solvent withdrawn from the regeneration column.

4. A process according to one of Claims 1 to 3, characterised in that any hydrocarbons contained in the solution are also released in the flash separator.

5. A process according to one of Claims 1 to 4, characterised in that the flash gas is first cooled and then subjected to condensate separation before introduction into the absorber for the selective reabsorption of $H_2S$.

6. A process according to one of Claims 1 to 5, characterised in that the gas not absorbed upon the reabsorption of the flash gas, which gas contains in particular $CO_2$ and a small proportion of $H_2S$ and also any released hydrocarbons, is sent to a combustion stage, in which the $H_2S$ is oxidised to $SO_2$.

7. A process according to one of Claims 1 to 6, characterised in that the oxidation of the $H_2S$ in the Claus process is effected using normal, non-enriched air as the oxidising agent.

8. A process according to one of Claims 1 to 7, characterised in that the reduced residual gas from the Claus process is introduced into the absorber used for the selective reabsorption of the $H_2S$ in a middle region between the inlet and the outlet of the absorber.

9. A process according to one of Claims 1 to 8, characterised in that the solution obtained from the reabsorption of the $H_2S$ is returned in a middle region between the inlet and the outlet of the absorption process for obtaining the $CO_2$- and $H_2S$-rich solution.

10. A plant for performing the process according to Claim 1, comprising a regeneration column (15) for stripping dissolved gases from a solution, and a Claus plant (10) for producing sulphur by oxidation of $H_2S$, the inlet to the Claus plant (10) being connected by a pipe (24) to the gas outlet (33) of the regeneration column (15), characterised in that

- a flash separator (3) is provided in the inlet region of the plant for partially separating off gases by expanding a solution which is under excess pressure, the flash separator (3) having

  - a feed line (1) for a $CO_2$- and $H_2S$-rich solution,
  - a discharge line (4) for the gases, and
  - a discharge line (19) for the treated solution,

- an absorber (9) is provided for the selective reabsorption of $H_2S$, which has

  - a feed line (11) for regenerated solvent,
  - a feed line (8) connected to the discharge line (4),
  - a residual gas feed line (12) communicating with a residual gas discharge line (30) of the Claus plant (10),

9

- a discharge line (17) for the solution produced in the absorber (9), and
- a discharge line (14) for the non-absorbed gas,

- a reduction plant (31) for converting sulphur constituents into $H_2S$ is inserted between the residual gas discharge line (30) of the Claus plant (10) and the residual gas feed line (12) of the absorber (9),
- the discharge line (19) for the solution from the flash separator (3) is connected to the regeneration column (15), and
- the discharge line (17) for the solution from the absorber (9) is either connected to the regeneration column (15) or to an absorber for producing a $CO_2$- and $H_2S$-rich solution.

11. A plant according to Claim 10, characterised in that an indirect heat exchanger (2) is inserted into the feed line (1) to the flash separator (3).

12. A plant according to Claim 11, characterised in that the heat exchanger (2) is inserted on the heating medium side into a discharge line (25) for removing regenerated solvent from the regeneration column (15).

13. A plant according to one of Claims 10 to 12, characterised in that a cooler (5) is inserted into the discharge line (4) for the flash gas.

14. A plant according to Claim 13, characterised in that the discharge line (4) opens into a condensation separator (6) after the cooler (5).

15. A plant according to one of Claims 10 to 14, characterised in that the feed line (14) for non-absorbed gas opens into a combustion chamber (13).

16. A plant according to one of Claims 10 to 15, characterised in that the residual gas feed line (12) opens into the absorber (9), which operates on the counter-current principle, in a middle region thereof.

17. A plant according to one of Claims 10 to 16, characterised in that the discharge line (26) for regenerated solvent opens into a middle region of an absorber plant, which operates on the counter-current principle, for producing the $CO_2$- and $H_2S$-rich solution.

**Revendications**

1. Procédé pour engendrer du soufre à partir d'une solution riche en $CO_2$ et $H_2S$, à partir de laquelle $CO_2$ et $H_2S$ se dégagent sous forme de gaz dans une colonne de régénération et un solvant régénéré est engendré, le gaz dégagé étant ensuite amené à un processus Claus, à partir duquel il est obtenu, d'une part, le soufre et, d'autre part, un gaz résiduel,
caractérisé en ce que :

- la solution riche en $CO_2$ et $H_2S$ en surpression est tout d'abord détendue dans un séparateur flash pour séparer, à chaque fois, une partie de $CO_2$ et $H_2S$ (gaz flash),
- le gaz flash est lavé pour la réabsorption sélective de $H_2S$ dans un absorbeur avec du solvant régénéré,
- la solution obtenue lors de la réabsorption est soit guidée avec la solution partiellement dégazée et retirée du séparateur flash dans la colonne de régénération pour dégager le gaz pour le processus Claus, soit amenée à un processus d'absorption préalable au procédé, dans lequel la solution riche en $CO_2$ et $H_2S$ pour le procédé peut être engendrée, et
- le gaz résiduel du processus Claus est ramené dans l'absorbeur pour la réabsorption sélective de $H_2S$, après que les composés soufrés contenus dans celui-ci ont été réduits en $H_2S$ par un traitement à l'hydrogène.

2. Procédé selon la revendication 1,
caractérisé en ce que la solution riche en $CO_2$ et $H_2S$ est réchauffée à une température de 50 à 110°C avant l'introduction dans le séparateur flash.

3. Procédé selon la revendication 2,
caractérisé en ce que le réchauffement de la solution riche en $CO_2$ et $H_2S$ est effectué par échange thermique indirect avec le solvant chaud régénéré extrait de la colonne de régénération.

4. Procédé selon une des revendications 1 à 3,
caractérisé en ce que des hydrocarbures éventuellement également contenus dans la solution sont dégagés dans le séparateur flash.

5. Procédé selon une des revendications 1 à 4,
caractérisé en ce que le gaz flash, avant l'introduction dans l'absorbeur pour la réabsorption sélective de $H_2S$, est tout d'abord refroidi et, ensuite, soumis à une séparation par condensation.

6. Procédé selon une des revendications 1 à 5,
caractérisé en ce que le gaz non absorbé lors de la réabsorption du gaz flash, qui contient en particulier $CO_2$ et une petite portion de $H_2S$, ainsi que, le cas échéant, des hydrocarbures dégagés, est amené à un processus de combustion dans lequel $H_2S$ est oxydé en $SO_2$.

7. Procédé selon une des revendications 1 à 6,
caractérisé en ce que l'oxydation de $H_2S$ dans le processus Claus est effectuée en utilisant de l'air normal non enrichi, comme agent d'oxydation.

8. Procédé selon une des revendications 1 à 7,
caractérisé en ce que le gaz résiduel réduit provenant du processus Claus, est introduit dans une zone médiane entre l'entrée et la sortie de l'absorbeur utilisé pour la réabsorption sélective de $H_2S$, dans celui-ci.

9. Procédé selon une des revendications 1 à 8,
caractérisé en ce que le retour de la solution obtenue à partir de la réabsorption de $H_2S$ dans une zone médiane entre l'entrée et la sortie du processus d'absorption est effectué pour produire la solution riche en $CO_2$ et $H_2S$.

10. Installation pour la mise en oeuvre du procédé selon la revendication 1, comportant une colonne de régénération (15) pour stripper des gaz solubilisés d'une solution et une installation Claus (10) pour engendrer du soufre par oxydation de $H_2S$, l'entrée de l'installation Claus (10) étant reliée par un conduit (24) à la sortie de gaz (33) de la colonne de régénération (15),
caractérisée en ce que :

   - dans la zone d'entrée de l'installation, il est prévu un séparateur flash (3) pour la séparation partielle des gaz par détente d'une solution en surpression, le séparateur flash (3) présentant :

      - un conduit d'amenée (1) pour une solution riche en $CO_2$ et $H_2S$,
      - un conduit d'évacuation (4) pour les gaz, et
      - un conduit d'évacuation (19) pour la solution traitée,

   - un absorbeur (9) pour la réabsorption sélective de $H_2S$ est prévu, qui comporte :

      - un conduit d'amenée (11) pour le solvant régénéré,
      - un conduit d'amenée (8) relié au conduit d'évacuation (4),
      - un conduit d'amenée (12) de gaz résiduel en liaison avec un conduit d'évacuation de gaz résiduel (30) de l'installation Claus (10),
      - un conduit d'évacuation (17) pour la solution engendrée dans l'absorbeur (9), et
      - un conduit d'évacuation (14) pour le gaz non absorbé,

   - entre le conduit d'évacuation de gaz résiduel (30) de l'installation Claus (10) et le conduit d'amenée de gaz résiduel (12) de l'absorbeur (9), il est monté une installation de réduction (31) pour transformer des composés soufrés en $H_2S$,
   - le conduit d'évacuation (19) pour la solution à partir du séparateur flash (3) est raccordé à la colonne de régénération (15), et
   - le conduit d'évacuation (17) pour la solution hors de l'absorbeur (9) est relié soit à la colonne de régénération (15), soit à un absorbeur pour engendrer une solution riche en $CO_2$ et $H_2S$.

11. Installation selon la revendication 10,
caractérisée en ce qu'un échangeur thermique indirect (2) est monté dans le conduit d'amenée (1) vers le séparateur flash (3).

**12.** Installation selon la revendication 11,
caractérisée en ce que l'échangeur thermique (2) est monté, du côté du fluide de chauffage, dans un conduit d'évacuation (25) pour évacuer le solvant régénéré de la colonne de régénération (15).

**13.** Installation selon une des revendications 10 à 12,
caractérisée en ce qu'un dispositif de refroidissement (5) est monté dans le conduit d'évacuation (4) pour le gaz flash.

**14.** Installation selon la revendication 13,
caractérisée en ce que le conduit d'évacuation (4) débouche derrière le dispositif de refroidissement (5) dans un séparateur à condensation (6).

**15.** Installation selon une des revendications 10 à 14,
caractérisée en ce que le conduit d'évacuation (14) pour le gaz non absorbé débouche dans une chambre de combustion (13).

**16.** Installation selon une des revendications 10 à 15,
caractérisée en ce que le conduit d'amenée (12) du gaz résiduel débouche dans une zone médiane de l'absorbeur (9) travaillant à contre-courant, dans celui-ci.

**17.** Installation selon une des revendications 10 à 16,
caractérisée en ce que le conduit d'évacuation (26) pour le solvant régénéré débouche dans une zone médiane d'une installation d'absorbeur travaillant à contre-courant pour engendrer la solution riche en $CO_2$ et $H_2S$.